(19) Europäisches Patentamt
European Patent Office
Office européen des brevets

(11) Veröffentlichungsnummer: **0 260 687 B1**

(12) **EUROPÄISCHE PATENTSCHRIFT**

(45) Veröffentlichungstag der Patentschrift: **18.12.91**

(51) Int. Cl.5: **C09K 19/38**, C09B 69/00, C08F 220/00, C09K 19/40

(21) Anmeldenummer: **87113593.5**

(22) Anmeldetag: **17.09.87**

Die Akte enthält technische Angaben, die nach dem Eingang der Anmeldung eingereicht wurden und die nicht in dieser Patentschrift enthalten sind.

(54) **Flüssigkristallines Copolymer.**

(30) Priorität: **19.09.86 DE 3631841**

(43) Veröffentlichungstag der Anmeldung: **23.03.88 Patentblatt 88/12**

(45) Bekanntmachung des Hinweises auf die Patenterteilung: **18.12.91 Patentblatt 91/51**

(84) Benannte Vertragsstaaten: **CH DE FR GB IT LI**

(56) Entgegenhaltungen:
**EP-A- 0 090 282**
**EP-A- 0 112 798**

**CHEMICAL ABSTRACTS, Band 100, 1984, Seite 20, Nr. 157259x, Columbus, Ohio, US; H. RINGSDORF et al.: "Phase behavior of dye-containing liquid crystalline copolymers and their mixtures with low molecular weight liquid crystals", & AM. CHEM. SOC., DIV. POLYM. CHEM. 1983, 24(2), 306-7**

**"Light Absorption of organic Colorants, J.Faber & H.Hartmann, Springer Verlag Berlin, 1980, S. 100-109**

(73) Patentinhaber: **BASF Aktiengesellschaft**
**Carl-Bosch-Strasse 38**
**W-6700 Ludwigshafen(DE)**

(72) Erfinder: **Etzbach, Karl-Heinz, Dr.**
**Carl-Bosch-Ring 55**
**W-6710 Frankenthal(DE)**
Erfinder: **Hisgen, Bernd, Dr.**
**Goethestrasse 6**
**W-6703 Limburgerhof(DE)**

**EP 0 260 687 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus dem Stand der Technik sind Polymere mit flüssigkristallinen Eigenschaften bekannt, bei denen die zur Mesophase führenden Reste über flexible Spacer als Seitenketten an eine Polymerhauptkette gebunden sind.

Eine Übersicht wird beispielsweise in Liquid Crystal Polymers I-III in Adv. Polym. Sci. 59-61, M. Gordon, N.A. Plate Springer-Verlag, 1984, Berlin) gegeben.

Als Polymerhauptkette kommen Polyacrylate oder Polymethacrylate (z.B. DE-A 27 22 589) oder Polysiloxane (EP-A 29 162) in Betracht.

Diese Polymere besitzen gegenüber niedermolekularen Flüssigkristallen den Vorteil, daß beim Übergang von der flüssigkristallinen Phase in die feste Phase die Struktur unverändert bleibt und somit das "Einfrieren" einer flüssigkristallinen Struktur im Glaszustand möglich wird.

Copolymere mit mesogenen Gruppen und Farbstoffresten in der Seitenkette sind in der EP-A 90 282 beschrieben und können in elektrooptischen Anzeigen oder zur Informationsspeicherung (EP-A 171 045) eingesetzt werden. Hierbei ist es für die Anwendung wichtig, daß die Eigenschaften der Farbstoffe auf die jeweilige Verwendung optimiert werden.

Aufgabe der Erfindung war es flüssigkristalline Copolymere, welche einen Farbstoffrest mit hohem Dichroismus, sehr guter Lichtstabilität und hoher molarer Extinktion tragen, bereitzustellen. Das Absorptionsmaximum des Farbstoffs sollte im Bereich der He-Ne-Laser Emission (633 nm) liegen.

Diese Aufgabe wird durch die erfindungsgemäßen flüssigkristallinen Copolymere gelöst. Dementsprechend betrifft die Erfindung ein flüssigkristallines Copolymer, daß dadurch gekennzeichnet ist, daß dieses ein Comonomer einpolymerisiert enthält, das einen Farbstoff enthaltenden Rest der allgemeinen Formel

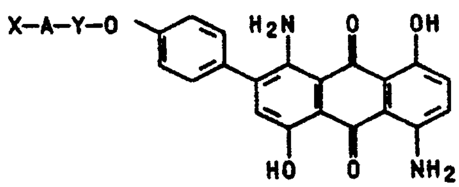

(I)

trägt, worin

X eine chemische Bindung, —O— oder

$-\overset{|}{N}R^1$,

Y eine chemische Bindung oder -CO-,

$R^1$ Wasserstoff oder $C_1$-$C_4$-Alkyl und

A eine lineare oder verzweigte $C_2$-$C_{20}$-Alkylengruppe sind, wobei die Kohlenstoffkette der Alkylengruppe durch -O-oder

$-\overset{|}{N}R^1$

unterbrochen sein kann.

Die erfindungsgemäßen Copolymere können insbesondere zusammen mit niedermolekularen Flüssigkristallen oder Flüssigkristallmischungen in elektrooptische Anzeigen vom Guest-Host-Typ eingesetzt werden und dienen hierbei als Lösungsvermittler für den Farbstoff. Der in den erfindungsgemäßen Copolymeren enthaltene Farbstoffrest besitzt gegenüber den in der EP-A 90 282 beschriebenen Blaufarbstoffen den Vorteil einer sehr guten Lichtstabilität bei hohem Dichroismus. Außerdem ist der molare Extinktionskoeffizient $\epsilon$ erheblich höher als bei den 1,4-Diaminoanthrachinonen der EP-A 90 282.

Die erfindungsgemäßen Copolymere können - bezogen auf das Copolymere - bis zu 45 Gew.% an Farbstoff enthalten. In der Regel liegt der Farbstoffgehalt bei 0,5 bis 40, vorzugsweise bei 0,8 bis 30

Gew.%, bezogen auf das Copolymer. Eine weitere wichtige technische Verwendung der erfindungsgemäßen Copolymere ist die Informationsspeicherung. Da hierbei eine möglichst hohe Absorptionsspeicherung in einer sehr dünnen Polymerschicht (meist ca. 0,1-1 µm) gefordert wird, ist ein möglichst hoher molarer Extinktionskoeffizient von technischem Vorteil. Zudem ist das Absorptionsmaximum des verwendeten erfindungsgemäßen Farbstoffsystems auf die He-Ne-Laser Emission abgestimmt.

Als flüssigkristalline Polymere kommen solche in Betracht, die an der Hauptkette über einen Spacer eine mesogene Gruppe $R^3$ tragen. Der Spacer dient hierbei zur Entkopplung der mesogenen Gruppe von der Hauptkette und erlaubt eine unabhängige Bewegung der mesogenen Gruppe. Vorzugsweise kommt als Spacer A eine lineare oder verzweigte $C_2$- bis $C_{20}$-Alkylengruppe in Betracht, welche durch -O- oder

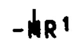

unterbrochen sein kann.

Mesogene Gruppen $R^3$ sind unter anderem in Kelker und Hatz, Handbook of Liquid Crystals, Verlag Chemie 1980, Seite 87-113 genannt.

Als Polymerhauptkette kommen Polyacrylate oder Polymethacrylate (z.B. DE-A 27 22 589) oder Polysiloxane (EP-A 29 162) in Betracht.

Bevorzugt sind flüssigkristalline Copolymere der allgemeinen Formel

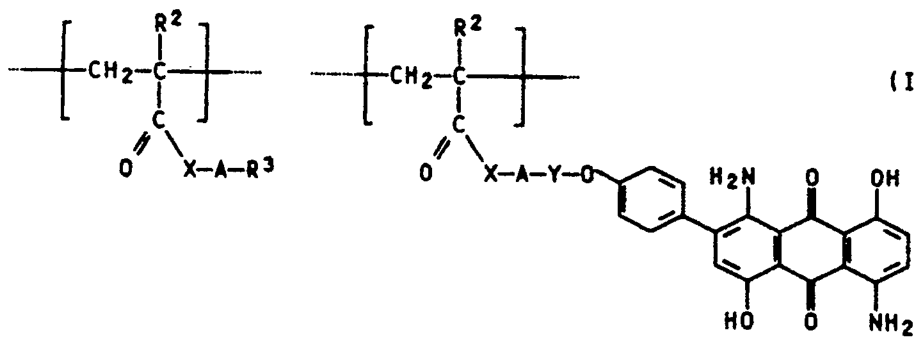

(II),

in der

$R^2$ Wasserstoff, Methyl oder Chlor,

X —O— oder

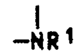

,

Y eine chemische Bindung oder —CO—,

$R^1$ Wasserstoff oder $C_1$- bis $C_4$-Alkyl,

A eine lineare oder verzweigte $C_2$- bis $C_{20}$-Alkylengruppe, welche durch —O— oder

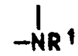

unterbrochen sein kann und

$R^3$ eine mesogene Gruppe sind und wobei das Copolymere gleiche oder verschiedene mesogene Gruppen tragen kann.

Für A sind im einzelnen z.B. zu nennen

$-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{11}-$, $-(CH_2)_2-O-(CH_2)_2-$, $-(CH_2)_3-O-(CH_2)_2-$,

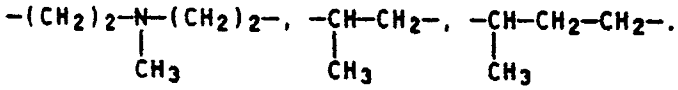

Vorzugsweise steht Y für eine chemische Bindung.

Als mesogene Gruppen $R^3$ kommen beispielsweise in Betracht:

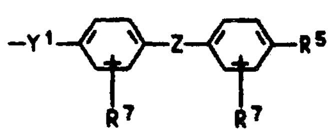 , 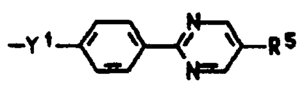, 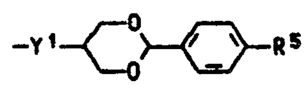,

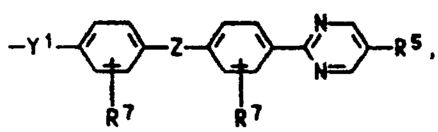, 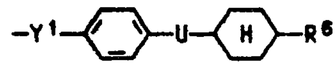 und

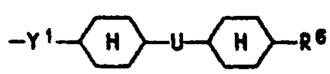 ,

worin

$Y^1$

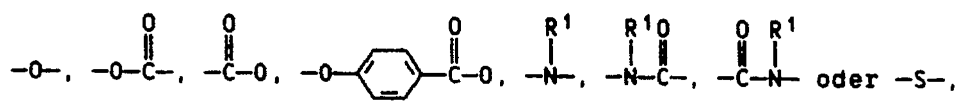

oder

Z eine chemische Bindung oder ein Rest der Formel

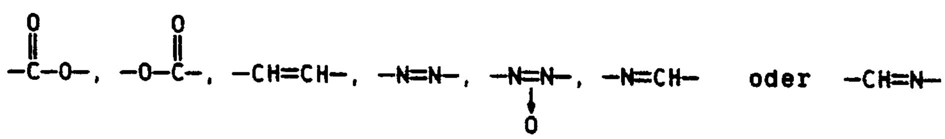

oder

U eine chemische Bindung oder ein Rest der Formel

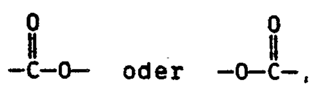

oder

$R^5$ Wasserstoff, $C_1$- bis $C_{12}$-Alkyl, $C_5$- bis $C_7$-Cycloalkyl, $C_1$- bis $C_{12}$-Alkoxy, $C_4$- bis $C_{12}$-Alkoxycarbonyl, $C_1$- bis $C_{12}$-Alkanoyloxy, Fluor, Chlor, Brom, Cyan, Phenyl, 4-Cyanphenyl oder Nitro,

$R^6$ Wasserstoff, $C_1$- bis $C_{12}$-Alkyl, $C_1$- bis $C_{12}$-Alkoxy oder $C_1$- bis $C_{12}$-Alkoxycarbonyl und

$R^7$ Methyl, Ethyl, Methoxy, Ethoxy oder Chlor bedeuten.

Besonders bevorzugt sind flüssigkristalline Copolymere der allgemeinen Formel (II) in der

$R^2$ Wasserstoff oder Methyl

X —O—,

Y eine chemische Bindung,

A eine lineare $C_2$- bis $C_{20}$-Alkylengruppe,

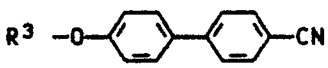 , 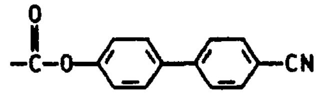 , 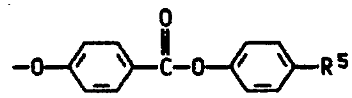 ,

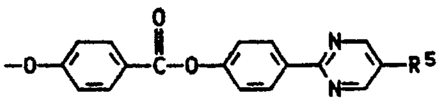 , 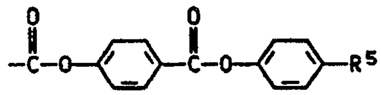 , 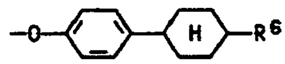 ,

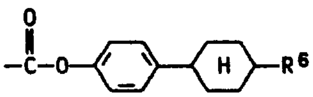 , 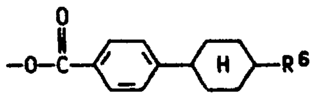 , 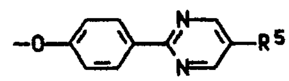 ,

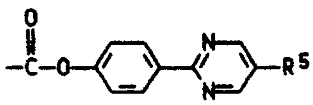 , 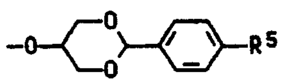 oder 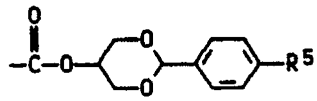 ,

$R^5$ $C_1$- bis $C_{12}$-Alkyl, $C_1$- bis $C_{12}$-Alkoxy, $C_4$- bis $C_{12}$-Alkoxycarbonyl, $C_1$- bis $C_{12}$-Alkanoyloxy, Fluor, Chlor, Cyan, Phenyl, 4-Cyanphenyl oder Nitro und

$R^6$ $C_1$- bis $C_{12}$-Alkyl bedeuten.

Weiter sind flüssigkristalline Copolymere der allgemeinen Formel (III) zu nennen:

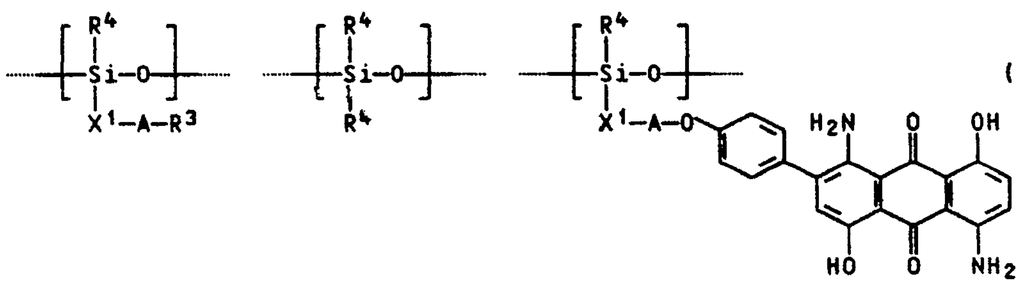 (III),

in der

A und $R^3$ die oben angegebene Bedeutung haben,

$X^1$ eine chemische Bindung und

$R^4$ Ethyl, Propyl, Butyl, Phenyl oder vorzugsweise Methyl ist.

Von Interesse sind auch flüssigkristalline Copolymere, welche optisch aktive Gruppen enthalten. Hierbei kann die optisch aktive Gruppe im Spacer A oder im Rest $R^3$, im letzteren Fall vorzugsweise in den Resten $R^5$ oder $R^6$ enthalten sein.

Einzelne optisch aktive Gruppen sind beispielsweise

für A: 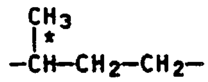

für $R^3$: 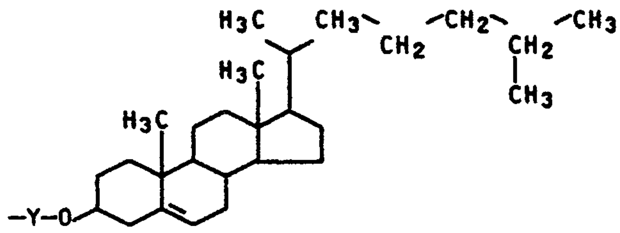

für $R^5$ oder $R^6$: 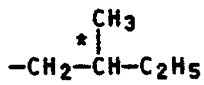, 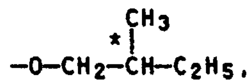, 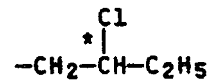,

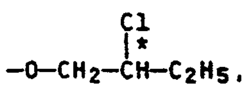, 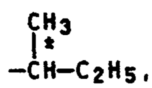, 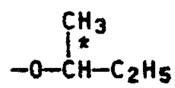, 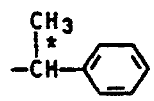 oder 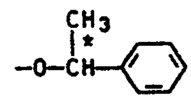.

Solche Copolymere können cholesterische oder chirale smektische Phasen ausbilden.

Die Copolymeren können nach an sich bekannten und in der Polymerchemie üblichen Verfahren hergestellt werden.

Zur Herstellung der erfindungsgemäßen Polyacrylate und Polymethacrylate kann man z.B. die Monomere,

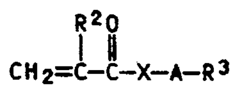 und

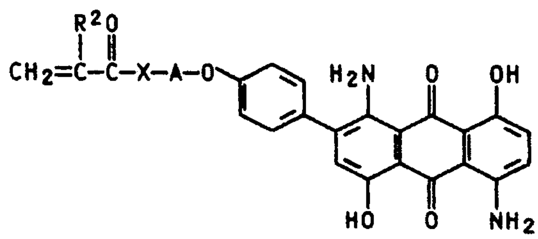

nach an sich bekannten Methoden copolymerisieren.

Die Synthese der mesogenen Monomere ist z.B. in der DE-OS 27 22 589 oder von V.P. Shibaev et al in Eur. Polym. J. 18, 651-659 (1982) beschrieben.

Die erfindungsgemäßen Polyacrylate und Polymethacrylate können auch dadurch hergestellt werden, daß man in polymeren Verbindungen der Formel

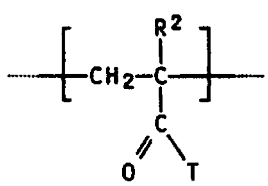

in der T ein austauschbarer Rest, z.B. Chlor oder niedermolekulares Alkoxy ist, die Reste X-A-$R^3$ und X-A-Farbstoff durch Veresterung, Umesterung oder Amidierung nach an sich bekannten Methoden einführt (C.M. Paleos et al in J. Polym. Sci. Polym. Chem. Ed. 19, 1427 (1981)).

Die Alkylierung der polymeren Verbindungen der Formel

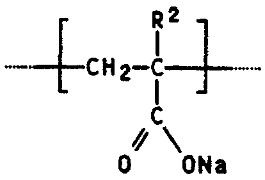

mit Halogeniden (Hal = Cl, Br oder J) der Formel Hal-A-$R^3$ und Hal-A-Farbstoff ist ebenfalls möglich und wird nach an sich bekannten Methoden durchgeführt (P. Keller in Macromolecules 17, 2937-2939 (1984)).

Die Herstellung der erfindungsgemäßen farbstoffhaltigen Polysiloxane kann analog zu den in der EP-A 29 162 oder EP-A 60 335 beschriebenen Verfahren erfolgen oder durch Einführung von mesogenen Gruppen $R^3$ und dem Farbstoffrest

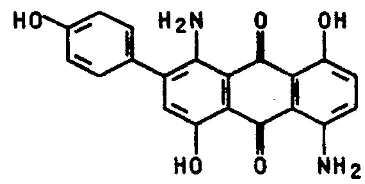

durch Veretherung, Veresterung oder Umesterung nach an sich bekannten Methoden an polymere Verbindungen der Formel

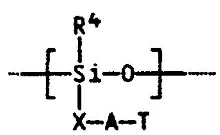 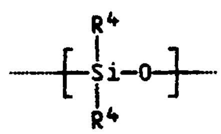 ,

in der X, A und $R^4$ die zuvor genannte Bedeutung haben und T ein austauschbarer oder reaktiver Rest, z.B. Cl, Br, COOH, COCl oder $CO_2$-Alkyl.

Einzelheiten der Herstellung können den Beispielen entnommen werden.

A. Synthese der Farbstoffmonomere

Beispiel 1

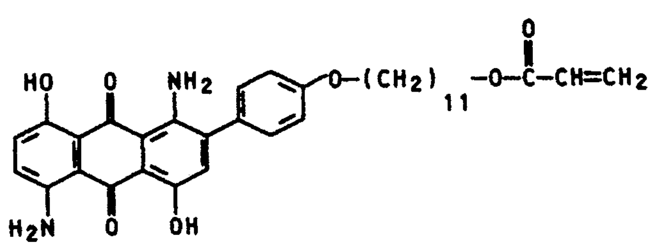

a) Herstellung von 11-Bromundecylacrylat

Eine Lösung aus 50,2 g 11-Bromundecanol, 72 g Acrylsäure, 3 g p-Toluolsulfonsäure und 0,1 g Hydrochinon in 120 ml 1,1,1-Trichlorethan wird 4 h am Wasserabscheider zum Sieden erhitzt. Nach dem Abkühlen der Lösung wird diese mit warmem Wasser, dann mit einer wässrigen Natriumhydrogencarbonatlösung und dann nochmals mit Wasser ausgeschüttelt und über Natriumsulfat getrocknet. Anschließend zieht man das Lösungsmittel am Rotationsverdampfer im Vacuum ab und destilliert das zurückbleibende Öl

im Hochvacuum. Man erhält 45,1 g (75 % d.Th.) eines farblosen Öls. Sdp. 113 °C/0,2 mbar.

b) Herstellung von 4,8-Diamino-1,5-dihydroxy-3-(4-hydroxiphenyl)-anthrachinon

Zu einer Lösung von 60 g Borsäure in 1200 ml Schwefelsäure gibt man bei 70 °C 120 g 4,8-Diamino-1,5-dihydroxianthrachinon-2,6-disulfonsäure und rührt anschließend noch 1 h bei 70 °C. Die tiefblaue Lösung wird auf 5 °C gekühlt, dann trägt man portionsweise 52,6 Teile Phenol so ein, daß die Temperatur 5 °C nicht übersteigt. Nach beendeter Zugabe rührt man die Mischung noch 2 h bei 5 °C und gibt sie dann in 4 kg Eiswasser. Die erhaltene Suspension wird noch 4 h zum Sieden erhitzt, der Niederschlag nach dem Abkühlen abgesaugt und mit Wasser gewaschen.

Das feuchte Nutschgut wird in einer Mischung aus 360 ml konz. Ammoniak und 800 ml Wasser gelöst, dann werden 66 g Natriumdithionit portionsweise zugegeben und das Reaktionsgemisch 5 h bei 80-90 °C gerührt. Nach dem Abkühlen gibt man 11,2 g Natriumhydroxid zu und leitet über Nacht Luft durch die Mischung. Dann säuert man mit verdünnter Salzsäure an, saugt den Niederschlag ab, wäscht ihn mit Wasser und trocknet ihn. Man erhält 61 g (60 % d.Th.) Rohprodukt, das durch Umkristallisation aus 600 ml Nitrobenzol gereinigt wird. Smp. 320 °C.

c) Herstellung von 4,8-Diamino-1,5-dihydroxy-3-(4-(11-Propenoyloxi-undecyloxi)-phenyl)-anthrachinon

Eine Mischung aus 7,2 g 4,8-Diamino-1,5-dihydroxi-3-(4-hydroxiphenyl)-anthrachinon, 6,7 g 11-Bromundecylacrylat, 2,8 g Kaliumcarbonat, 0,5 g Kaliumjodid und 80 ml Dimethylformamid wird 7 h bei 80 °C gerührt. Dann gibt man sie auf Eiswasser, säuert mit verdünnter Salzsäure schwach an, saugt den Niederschlag ab, wäscht ihn mit Wasser und trocknet ihn.

Man erhält 11,8 g Rohprodukt das durch Chromatographie über Kieselgel (Merck, Kieselgelb 60, 0,063-0,200 mm) mit Toluol/Tetrahydrofuran (10/1) als Eluationsmittel und anschließende Umkristallisation aus Toluol gereinigt wird.

Smp. 135 °C, $\lambda_{max}$ ($CH_2Cl_2$): 623 nm (27 470)

| $C_{34}H_{38}N_2O_7$ (586) | | | | |
|---|---|---|---|---|
| Ber.: | 69,6 % C | 6,5 % H | 4,8 % N | 19,1 % O |
| Gef.: | 69,5 % C | 6,6 % H | 4,7 % N | 18,9 % O |

Die Herstellung der Farbstoffe von Beispiel 2 bis 7 erfolgt analog zu der in Beispiel 1 beschriebenen Methode durch Alkylierung von 4,8-Diamino-1,5-dihydroxi-(4-hydroxiphenyl)-anthrachinon mit den entsprechenden Halogeniden.

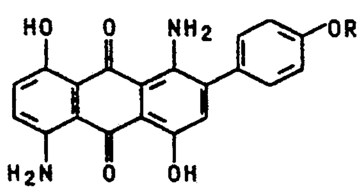

| Bsp. | | Schmp. |
|---|---|---|
| 2 | 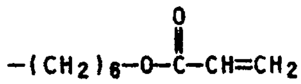 | 136 °C (aus Toluol) |
| 3 | 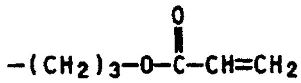 | 164 °C (aus Toluol) |
| 4 | 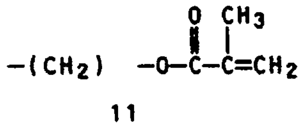 | 136 °C (aus Toluol) |
| 5 | $-(CH_2)_9-CH=CH_2$ | |
| 6 | $-(CH_2)_{11}-OH$ | 175 °C (aus Methylglykol) |
| 7 | $-(CH_2)_6-Br$ | |

In Tabelle 1 sind der in handelsüblichen Displays (Polyimidorientierung) bei Raumtemperatur in ZLI 1840 (Fa. E. Merck) gemessene Ordungsgrad S, das Absorptionsmaximum $\lambda_{max}$ und die bei Raumtemperatur in ZLI 1840 gemessene Löslichkeit L für die Farbstoff enthaltenden Monomeren der Beispiele 1 bis 3 angegeben.

Tabelle 1

| Bsp. | Ordnungsgrad S | $\lambda_{max}$ | Löslichkeit L |
|---|---|---|---|
| 1 | 0,71 | 642 nm | 1,3 % |
| 2 | 0,70 | 641 nm | 3,2 % |
| 3 | 0,68 | 641 nm | 1,1 % |

B. Synthese der Copolymeren

Polyacrylate, Polymethacrylate und Polychloracrylate werden nach der folgenden allgemeinen Vorschrift hergestellt:

Allgemeine Polymerisationsvorschrift:

In einem Schlenkgefäß wird eine Monomerlösung, bestehend aus 10 Gew.% einer Mischung aus Farbstoffmonomer und mesogenem Monomer in absolutem Tetrahydrofuran oder absolutem Dioxan, mit ,Azo-bis-isobuttersäurenitril versetzt. Nach 10-minütigem Hindurchleiten von Stickstoff wird die Monomerlösung bei 60 °C (Tetrahydrofuran) oder 70 °C (Dioxan) thermostatisiert. Nach erfolgter Polymerisation werden die Polymeren von den Monomeren ausschlußchromatographisch am System Sephadex LH 20/Tetrahydrofuran abgetrennt. Nach der Entfernung des Tetrahydrofurans wird das Polymere im Hochvakuum getrocknet. Die quantitative Zusammensetzung der Copolymeren erfolgt mittels UV-Spektroskopie und Elementaranalyse. Die Bestimmung der Phasenübergangstemperaturen erfolgt differentialkalorimetrisch. Die Zuordnung der flüssigkristallinen Phasen erfolgt anhand der unter einem mit Heiztisch ausgestatteten Polarisationsmikroskop auftretenden Texturen.

Beispiel 8

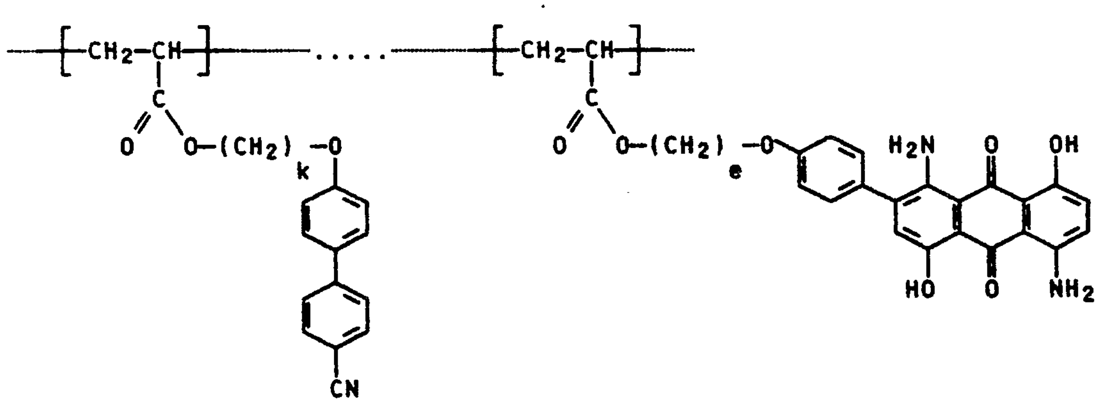

Die Copolymeren aus 4-(6-Propenoyloxy)-alkoxy-4'-cyanobiphenyl und 4,8-Diamino-1,5-dihydroxi-3-(4-(11-propenoyloxi-alkoxi)-phenyl)-anthrachinon wurden nach der allgemeinen Vorschrift in Dioxan hergestellt, wobei der Anteil des Farbstoffmonomeren variiert wurde. Die vorschriftgemäß gereinigten Polymeren bilden beim Tempern im Heiztisch des Polarisationsmikroskops smektische und nematische Texturen aus.

In Tabelle 2 sind die Farbstoffgehalte der Copolymeren mit den Ergebnissen der differentialkalorimetrischen und polarisationsmikroskopischen Untersuchungen zusammengefaßt (g: glasig, s: smektisch, n: nematisch, i: isotrop).

Tabelle 2

| Beispiel | k | l | Initiator (mol.%) | Mesog. Monom. (g) | Farbst.-monomer (g) | Farbst. gehalt (Gew.%) | Phasenübergänge (°C) |
|---|---|---|---|---|---|---|---|
| 8a | 2 | 6 | 1 | 1,96 | 0,04 | 2 | g 53 n 108 i |
| 8b | 5 | 6 | 1 | 1,80 | 0,20 | 10 | g 48 s 103 n 111 i |
| 8c | 6 | 6 | 5 | 1,96 | 0,04 | 2 | g 41 s 111 n 123 i |
| 8d | 6 | 6 | 1 | 2,94 | 0,06 | 2 | g 40 s 117 n 127 i |
| 8e | 6 | 6 | 1 | 2,70 | 0,30 | 10 | g 42 s 116 n 123 i |
| 8f | 6 | 6 | 1 | 2,55 | 0,45 | 14,8 | g 43 s 146 n 119 i |
| 8g | 6 | 11 | 3 | 1,96 | 0,04 | 2 | g 40 s 117 n 128 i |
| 8h | 6 | 11 | 3 | 2,70 | 0,30 | 10 | g 42 s 115 n 125 i |
| 8i | 6 | 11 | 3 | 1,70 | 0,30 | 14,5 | g 43 s 114 n 123 i |
| 8k | 6 | 11 | 3 | 3,20 | 0,80 | 19 | g 45 s 112 n 119 i |

Beispiel 9

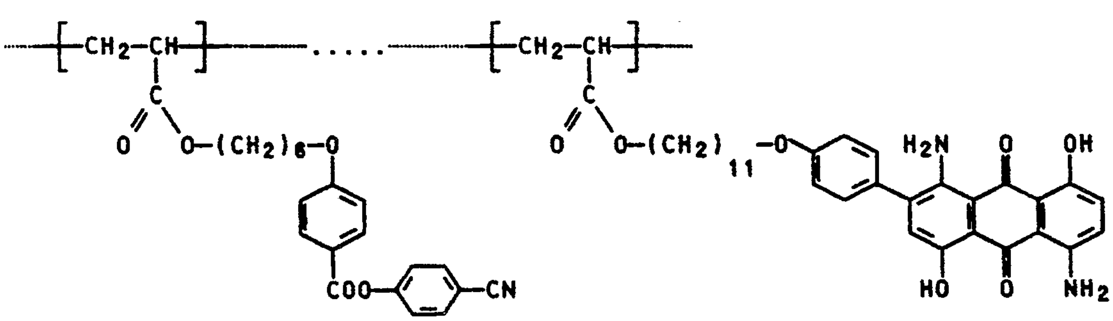

Die Copolymeren aus 4-(6-Propenoyloxy)-hexyloxybenzoesäure-4'-cyanophenylester und 4,8-Diamino-1,5-dihydroxi-3-(4-(11-propenoyloxi-undecyloxi)-phenyl)-anthrachinon wurden in Dioxan mit 3 mol.% AIBN nach der allgemeinen Vorschrift hergestellt, wobei der Anteil des Farbstoffmonomers variiert wurde. Die Polymeren bilden nematische Texturen aus.

In Tabelle 3 sind die Farbstoffgehalte der Copolymeren mit den Ergebnissen der differentialkalorimetrischen und polarisationsmikroskopischen Untersuchungen zusammengefaßt (g: glasig, n: nematisch, i: isotrop).

Tabelle 3

| Beisp. | Mesogenes Monomer (g) | Farbstoffmonomer (g) | Farbstoffgehalt (Gew.%) | Phasenübergänge (°C) |
|---|---|---|---|---|
| 9a | 1,96 | 0,04 | 2 | g 33 n 128 i |
| 9b | 1,80 | 0,20 | 10 | g 33 n 118 i |
| 9c | 3,20 | 0,80 | 19,5 | g 35 n 109 i |
| 9d | 3,00 | 1,00 | 24 | g 36 n 106 i |

Beispiel 10

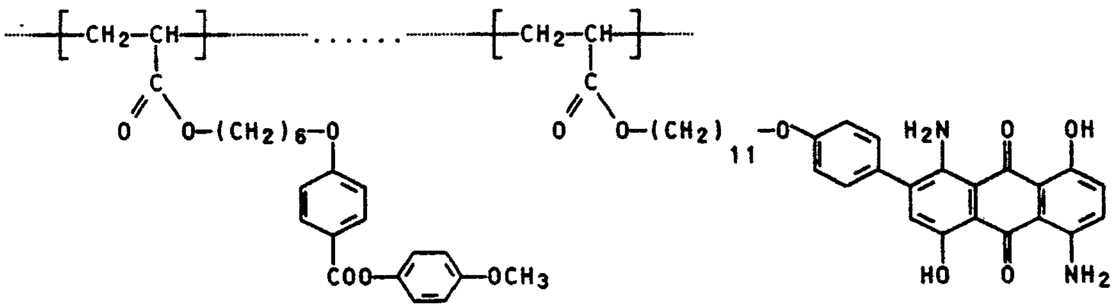

Die Copolymeren aus 4-(6-Propenoyloxy)-hexyloxybenzoesäure-4'-methoxyphenylester und 4,8-Diamino-1,5-dihydroxi-3-(4-(11-propenoyloxi-undecyloxi)-phenyl)-anthrachinon wurden in Dioxan mit 3 mol.% AIBN nach der allgemeinen Vorschrift hergestellt, wobei der Anteil des Farbstoffmonomers variiert wurde. Die Polymeren bilden smektische und nematische Phasen aus.

In Tabelle 4 sind die Farbstoffgehalte der Copolymeren mit den Ergebnissen der differentialkalorimetrischen und polarisationsmikroskopischen Untersuchungen zusammengefaßt (g: glasig, $s_A$: smektisch A, n: nematisch, i: isotrop).

Tabelle 4

| Beisp. | Mesogenes Monomer (g) | Farbstoffmonomer (g) | Farbstoffgehalt (Gew.%) | Phasenübergänge (°C) |
|---|---|---|---|---|
| 10a | 3,92 | 0,08 | 2 | g 30 $s_A$ 94 n 117 i |
| 10b | 3,60 | 0,40 | 9,8 | g 32 $s_A$ 91 n 111 i |
| 10c | 3,20 | 0,80 | 19,3 | g 33 $s_A$ 87 n 105 i |

Beispiel 11

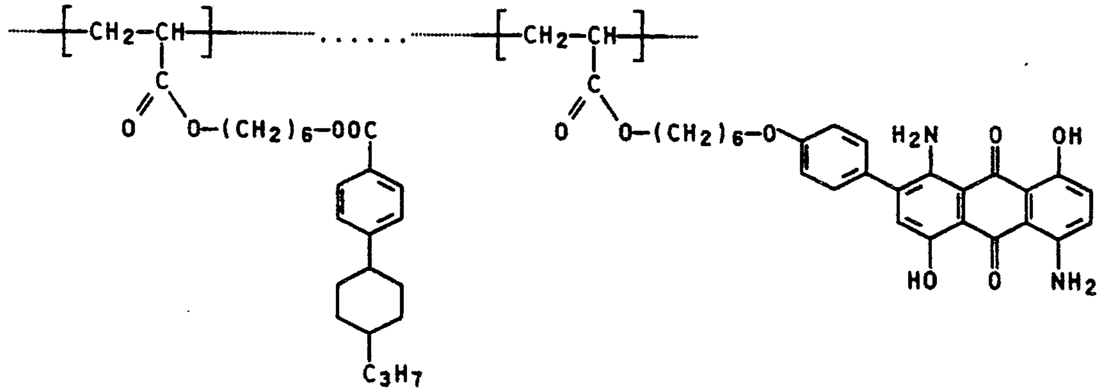

Beispiel 12

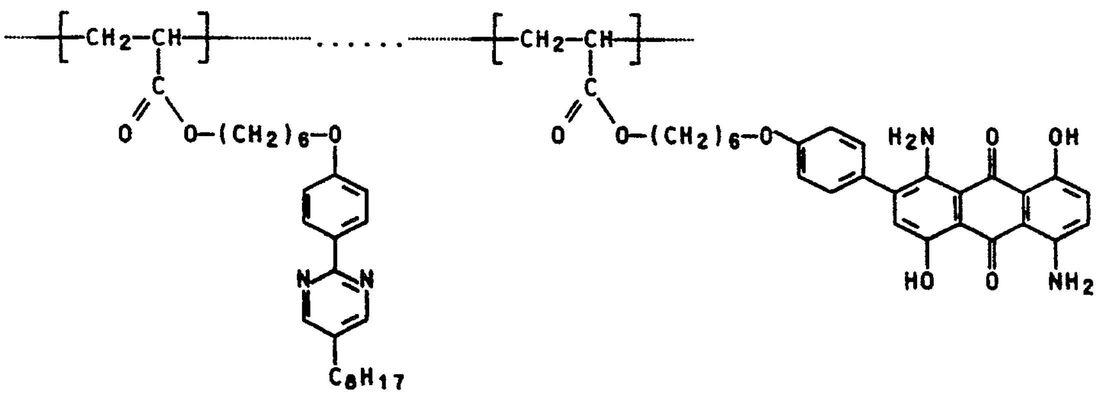

Beispiel 13

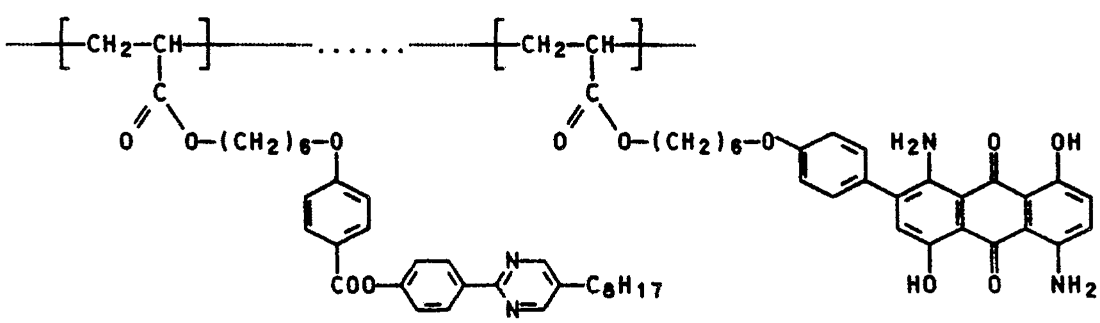

Beispiel 14

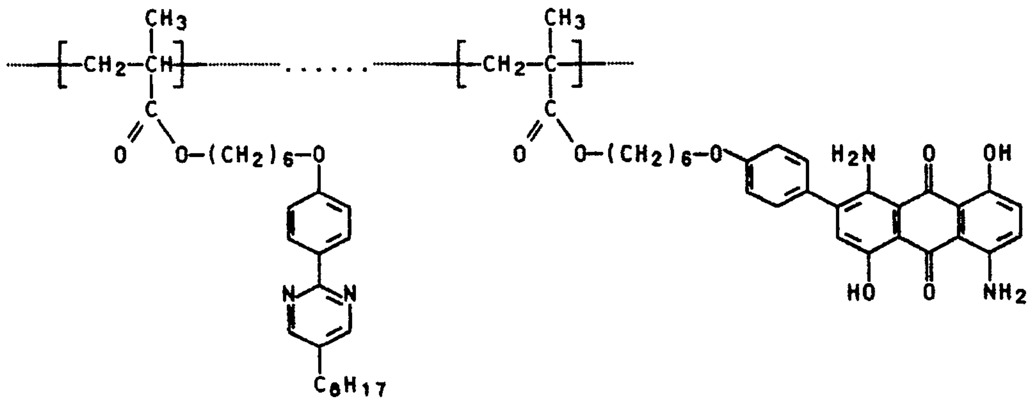

Beispiel 15

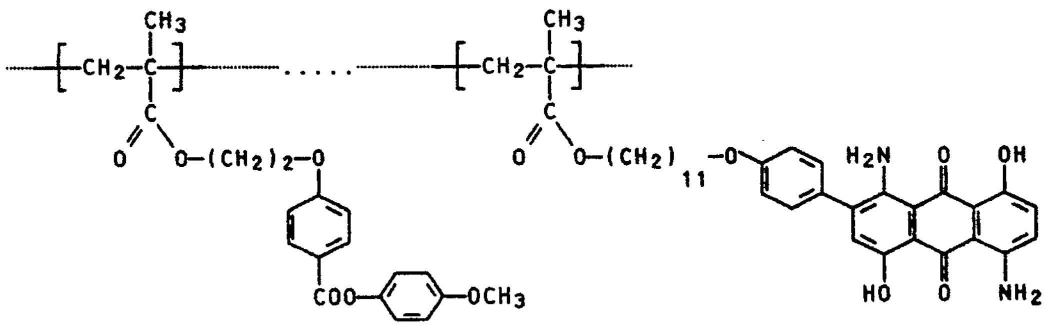

Beispiel 16

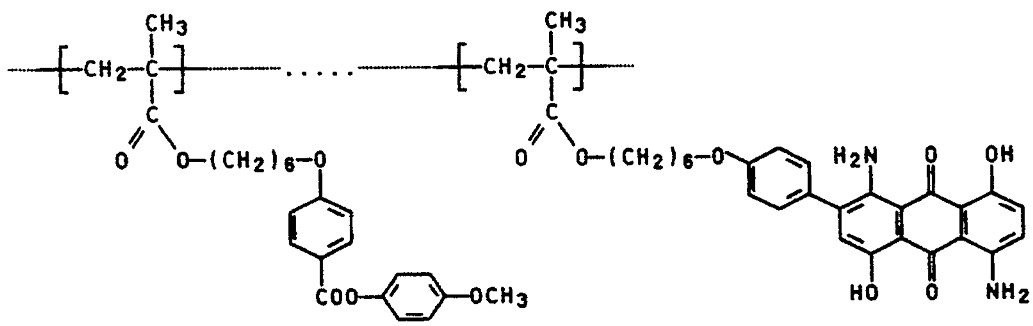

Beispiel 17

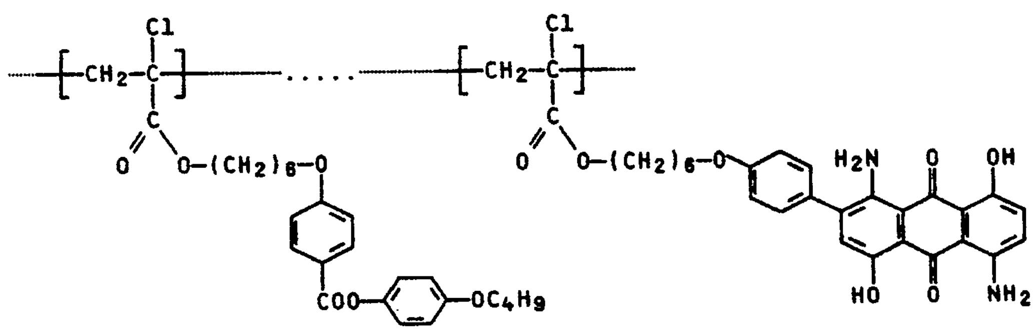

Beispiel 18

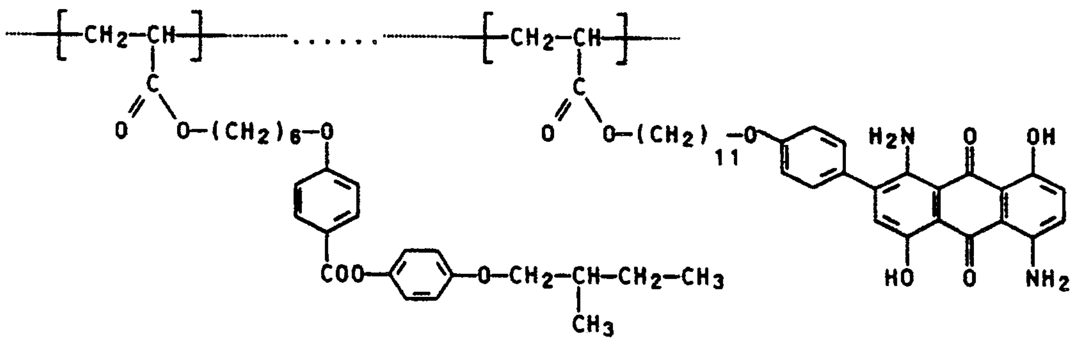

Die Polymerisationsbedingungen und die Untersuchungsergebnisse für die Beispiele 11 - 18 sind in Tabelle 5 zusammengefaßt:

Tabelle 5

| Beispiel | Lösungsmittel | Initiator (mol.%) | Mesog. Monom. (g) | Farbst.-monomer (g) | Farbst. gehalt (Gew.%) | Phasenübergänge (°C) |
|---|---|---|---|---|---|---|
| 11a | Dioxan | 3 | 1,98 | 0,02 | 1 | g 3 n 31 i |
| 11 b | " | 3 | 1,95 | 0,05 | 2,5 | g 1 n 28 i |
| 12 | " | 1 | 3,92 | 0,08 | 2 | g 12 s 91 i |
| 13 | " | 1 | 3,92 | 0,08 | 2 | g 28 n 153 i |
| 14 | " | 1 | 1,96 | 0,04 | 2 | g 33 s 90 i |
| 15 | " | 1 | 2,94 | 0,06 | 2 | g 88 n 106 i |
| 16 | " | 1 | 2,94 | 0,06 | 2 | g 43 n 109 i |
| 17 | " | 3 | 1,96 | 0,04 | 2 | g 33 s 98 i |
| 18 | " | 2 | 4,50 | 0,50 | 10 | |

Beispiel 19

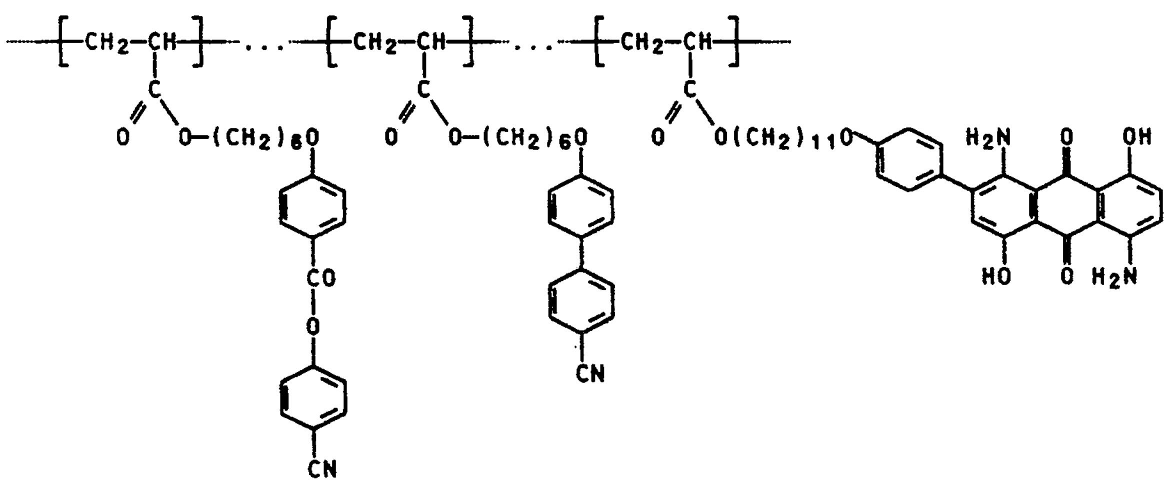

Das Copolymere aus 1,8 g (45 Gew.-Teilen) 4-(6-Propenoyloxi)-hexyloxibenzoesäure-4'-cyanophenylester, 1,8 g (45 Gew.-Teilen) 4-(6-Propenoyloxi)-hexyloxi-4'-cyanobiphenyl und 0,40 g (10 Gew.-Teilen) 4,8-Diamino-1,5-dihydroxi-3-(4-(11-propenoyloxi-undecyloxi)-phenyl)-anthrachinon wurde nach der allgemeinen Vorschrift in Dioxan mit 3 mol.% AIBN hergestellt. Das Copolymere hat folgendes Phasenverhalten:
g 35 s 110 n 118 i

(Temperaturen in ° C; g: glasig, s: smektisch, n: nematisch, i: isotrop).

Beispiel 20

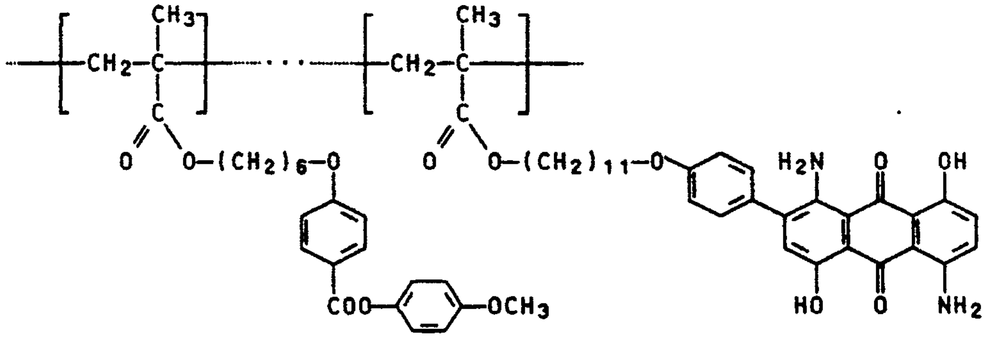

Beispiel 21

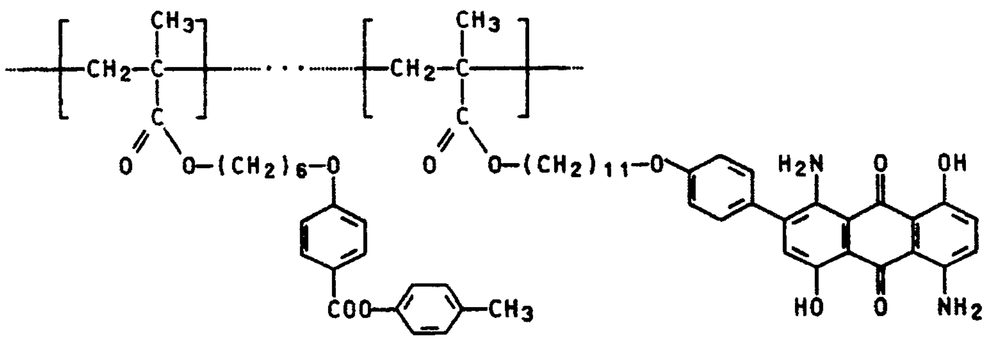

Beispiel 22

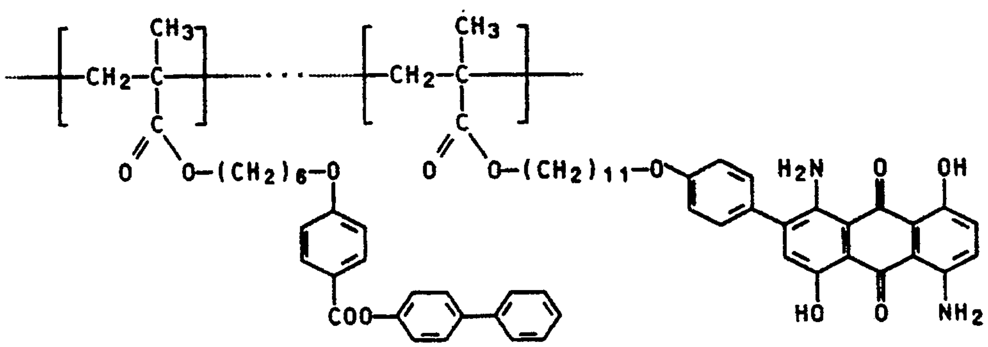

Beispiel 23

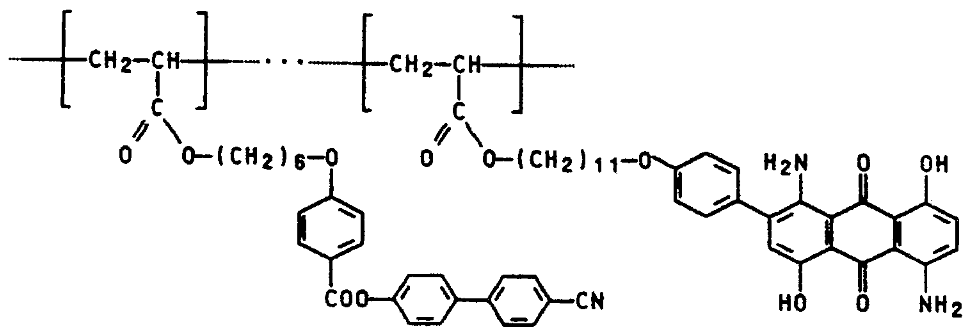

Beispiel 24

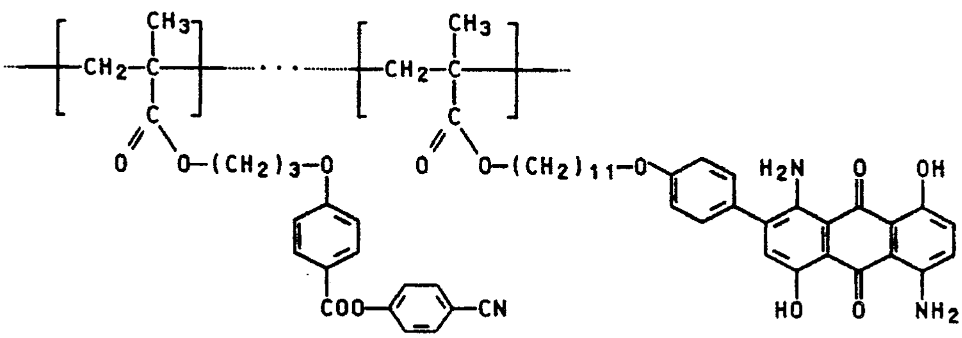

Die Polymerisationsbedingungen und die Untersuchungsergebnisse für die Beispiele 20-24 sind in Tabelle 6 zusammengefaßt:

Tabelle 6

| Bsp. | Lösungsmittel | Initiator (mol%) | Mesog. Monom. (g) | Farbst.-monomer (g) | Farbst.-gehalt (Gew.%) | Phasenübergänge (°C) |
|---|---|---|---|---|---|---|
| 20a | Toluol | 1 | 9 | 1 | 10,3 | g 56 n 111 i |
| 20b | Toluol | 2 | 8 | 2 | 19,1 | g 60 n 109 i |
| 21a | Toluol | 2 | 9 | 1 | 9,1 | g 58 n 87 i |
| 21b | Toluol | 2 | 2,4 | 0,6 | 19,7 | g 66 n 87 i |
| 22 | Toluol | 1 | 9 | 1 | 9,4 | g 80 s 169 n 180 i |
| 23 | Toluol | 3 | 8 | 2 | 18 | g 59 s 300 i |
| 24 | THF | 2 | 4,86 | 0,97 | 18,9 | |

## Patentansprüche

1. Flüssigkristallines Copolymer, dadurch gekennzeichnet, daß dieses ein Comonomer einpolymerisiert enthält, das einen Farbstoff enthaltenden Rest der allgemeinen Formel

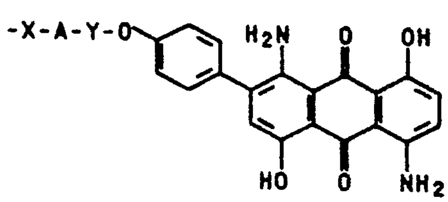

trägt, worin

X eine chemische Bindung,

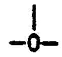 oder 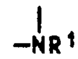,

Y eine chemische Bindung oder -CO-,

$R^1$ Wasserstoff oder $C_1$-$C_4$-Alkyl und

A eine lineare oder verzweigte $C_2$-$C_{20}$-Alkylengruppe sind, wobei die Kohlenstoffkette der Alkylengruppe durch —O— oder

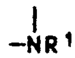

unterbrochen sein kann.

2. Flüssigkristallines Copolymer gemäß Anspruch 1, dadurch gekennzeichnet, daß das Polymere durch die allgemeine Formel

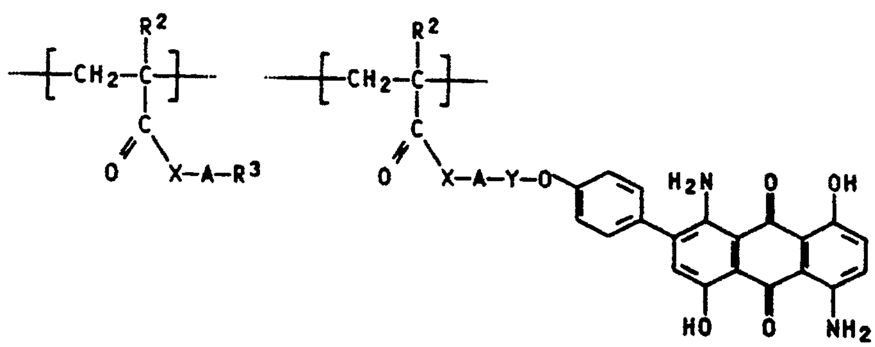

beschrieben wird, in der

X —O— oder

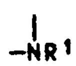,

$R^2$ Wasserstoff, Methyl oder Chlor und

$R^3$ eine mesogene Gruppe bedeutet und wobei das Copolymer gleiche oder verschiedene mesogene Gruppen tragen kann.

3. Flüssigkristallines Copolymer gemäß Anspruch 1 oder Anspruch 2, dadurch gekennzeichnet, daß Y eine chemische Bindung ist.

4. Flüssigkristallines Copolymer gemäß Anspruch 2 oder Anspruch 3, dadurch gekennzeichnet, daß $R^3$ für Gruppen der Formeln

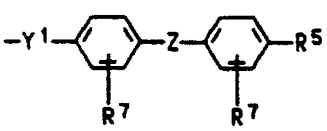, 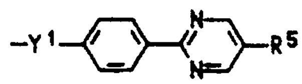, 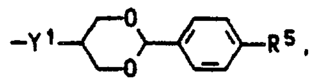,

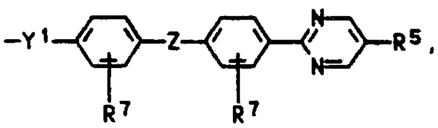, 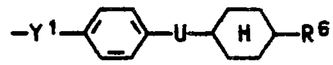 oder

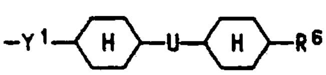

steht, in denen

$Y^1$

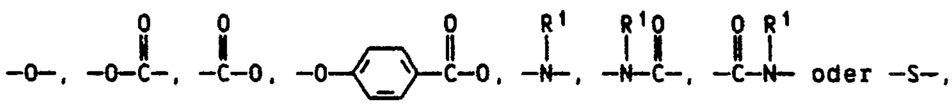

oder

Z eine chemische Bindung oder ein Rest der Formel

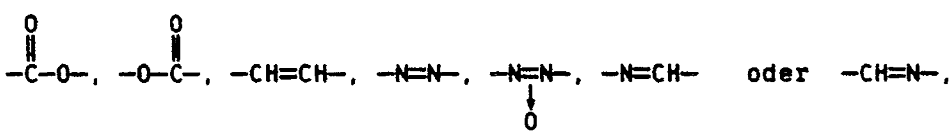

oder

U eine chemische Bindung oder ein Rest der Formel

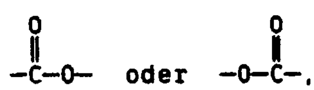

oder

$R^5$ Wasserstoff, $C_1$- bis $C_{12}$-Alkyl, $C_5$- bis $C_7$-Cycloalkyl, $C_1$- bis $C_{12}$-Alkoxy, $C_4$- bis $C_{12}$-Alkoxycarbonyl, $C_1$- bis $C_{12}$-Alkanoyloxy, Fluor, Chlor, Brom, Cyan, Phenyl, 4-Cyanphenyl oder Nitro,

$R^6$ Wasserstoff, $C_1$- bis $C_{12}$-Alkyl, $C_1$- bis $C_{12}$-Alkoxy oder $C_1$- bis $C_{12}$- Alkoxycarbonyl und

$R^7$ Methyl, Ethyl, Methoxy, Ethoxy oder Chlor bedeuten.

**5.** Flüssigkristallines Copolymer gemäß Anspruch 2 oder Anspruch 3, dadurch gekennzeichnet, daß

$R^2$ Wasserstoff oder Methyl,

X —O—,

A eine lineare $C_2$- bis $C_{20}$-Alkylengruppe und

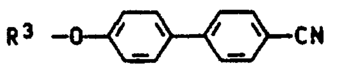 , 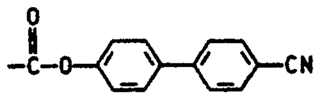 , 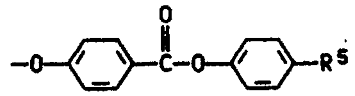 ,

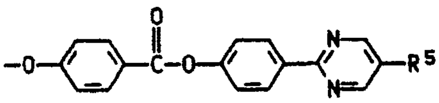 , 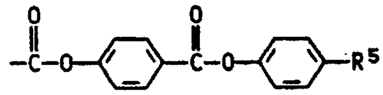 , 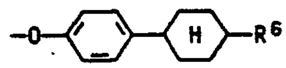 ,

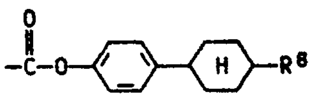 , 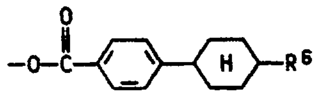 , 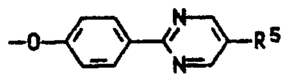 ,

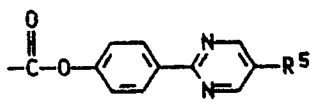 , 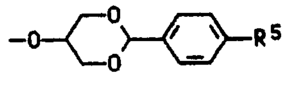 oder 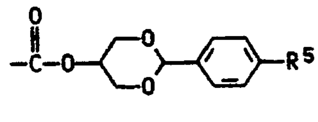

bedeuten, worin

$R^5$ für $C_1$- bis $C_{12}$-Alkyl, $C_1$- bis $C_{12}$-Alkoxy, $C_4$- bis $C_{12}$-Alkoxycarbonyl,$C_1$- bis $C_{12}$-Alkanoyloxy, Fluor, Chlor, Cyan, Phenyl, 4-Cyanphenyl oder Nitro und

$R^6$ für $C_1$- bis $C_{12}$-Alkyl stehen.

6. Flüssigkristallines Copolymer gemäß Anspruch 1 dadurch gekennzeichnet, daß das Polymer durch die allgemeine Formel

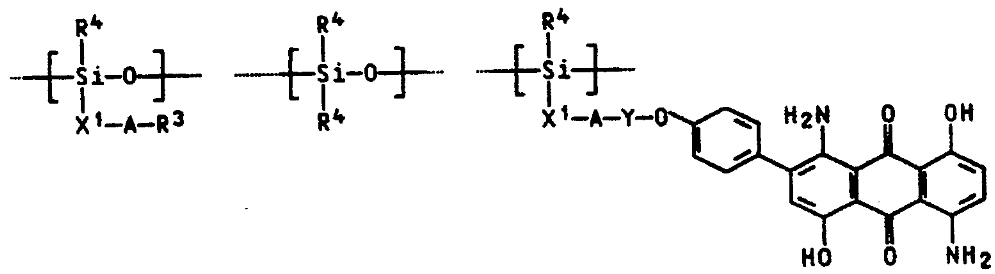

beschrieben wird, in der

$R^3$ eine mesogene Gruppe,

$X^1$ eine chemische Bindung und

$R^4$ $C_1$- bis $C_4$-Alkyl oder Phenyl bedeuten.

7. Flüssigkristallines Copolymer gemäß den Ansprüchen 1 bis 5, dadurch gekennzeichnet, daß dieses 0,5 bis 40 Gew.%, bezogen auf das Polymer, Farbstoff enthält.

## Claims

1. A liquid crystalline copolymer which contains, as copolymerised units, a comonomer which carries a dye-containing radical of the formula

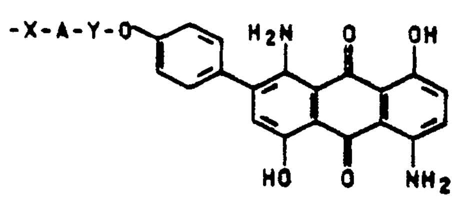

where X is a chemical bond,

$$-O- \text{ or } -NR^1,$$

Y is a chemical bond or -CO-, $R^1$ is hydrogen or $C_1$-$C_4$-alkyl and A is a linear or branched $C_2$-$C_{20}$-alkylene group, and the carbon chain of the alkylene group can be interrupted by -O- or

$$-NR^1.$$

2. A liquid crystalline copolymer as claimed in claim 1, which is of the formula

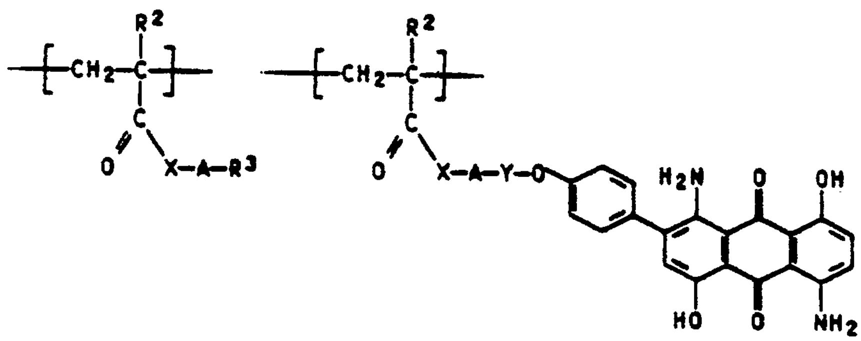

where X is -O- or

$$-NR^1,$$

$R^2$ is hydrogen, methyl or chlorine and $R^3$ is a mesogenic group, and the copolymer can carry identical or different mesogenic groups.

3. A liquid crystalline copolymer as claimed in claim 1 or 2, wherein Y is a chemical bond.

4. A liquid crystalline copolymer as claimed in claim 2 or 3, wherein $R^3$ is a group of the formula

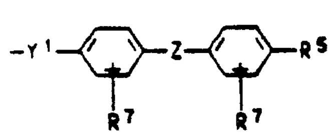 , 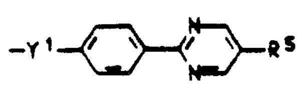 , 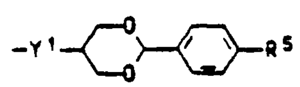 ,

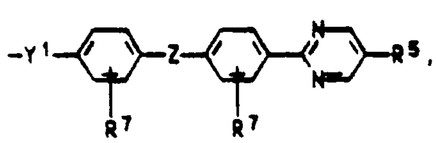 , 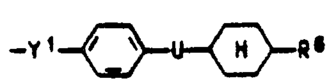 or

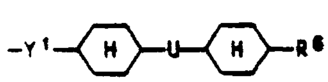

where $Y^1$ is

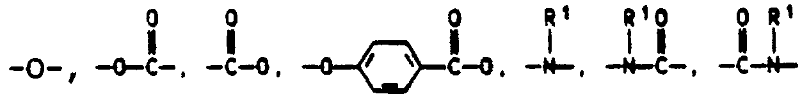

or -S-, Z is a chemical bond or a radical of the formula

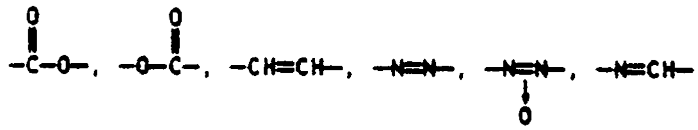 or -CH=N-,

U is a chemical bond or a radical of the formula

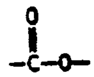 or 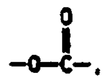,

$R^5$ is hydrogen, $C_1$-$C_{12}$-alkyl, $C_5$-$C_7$-cycloalkyl, $C_1$-$C_{12}$-alkoxy, $C_4$-$C_{12}$-alkoxycarbonyl, $C_1$-$C_{12}$-alkanoyloxy, fluorine, chlorine, bromine, cyano, phenyl, 4-cyanophenyl or nitro, $R^6$ is hydrogen, $C_1$-$C_{12}$-alkyl, $C_1$-$C_{12}$-alkoxy or $C_1$-$C_{12}$-alkoxycarbonyl and $R^7$ is methyl, ethyl, methoxy, ethoxy or chlorine.

**5.** A liquid crystalline copolymer as claimed in claim 2 or 3, wherein $R^2$ is hydrogen or methyl, X is -O-, A is a linear $C_2$-$C_{20}$-alkylene group and $R^3$ is

$R^3$ 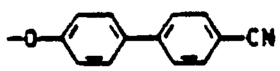, 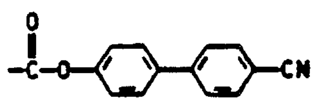, 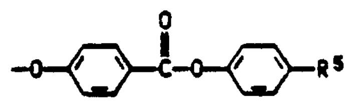,

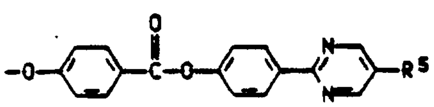, 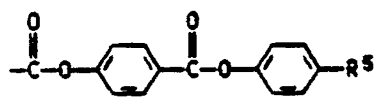, 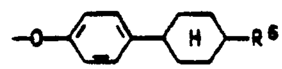,

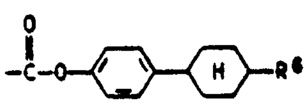, 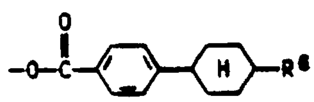, 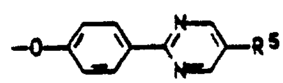,

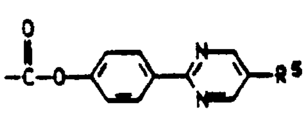, 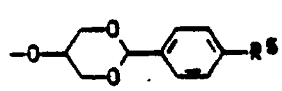 or 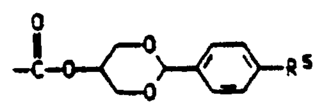

where $R^5$ is $C_1$-$C_{12}$-alkyl, $C_1$-$C_{12}$-alkoxy, $C_4$-$C_{12}$-alkoxycarbonyl, $C_1$-$C_{12}$-alkanoyloxy, fluorine, chlorine, cyano, phenyl, 4-cyanophenyl or nitro and $R^6$ is $C_1$-$C_{12}$-alkyl.

**6.** A liquid crystalline copolymer as claimed in claim 1, which is of the formula

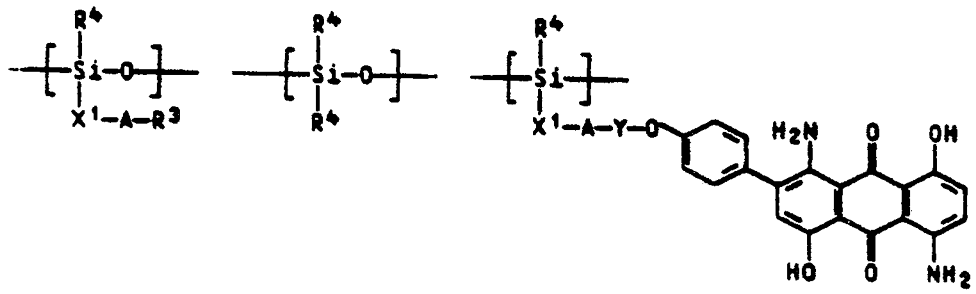

where $R^3$ is a mesogenic group, $X^1$ is a chemical bond and $R^4$ is $C_1$-$C_4$-alkyl or phenyl.

7. A liquid crystalline copolymer as claimed in claims 1 to 5, which contains from 0.5 to 40% by weight, based on the copolymer, of a dye.

**Revendications**

1. Copolymère cristallin liquide, caractérisé par le fait que celui-ci contient un comonomère mis en polymérisation qui porte un reste contenant un colorant, de la formule générale

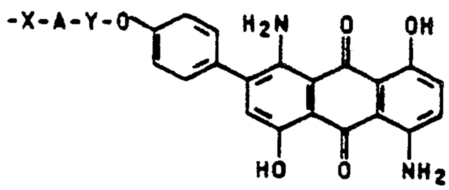

dans laquelle

X est une liaison chimique,

-O- ou -NR$^1$,

Y, une liaison chimique ou -CO-

$R^1$, hydrogène ou alkyle en $C_1$-$C_4$ et

A, un groupe alkylène en $C_2$-$C_{20}$ linéaire ou ramifié, la chaîne carbonée du groupe alkylène pouvant être interrompue par -O- ou -NR$^1$.

2. Copolymère cristallin liquide selon la revendication 1, caractérisé par le fait que le polymère est décrit par la formule générale

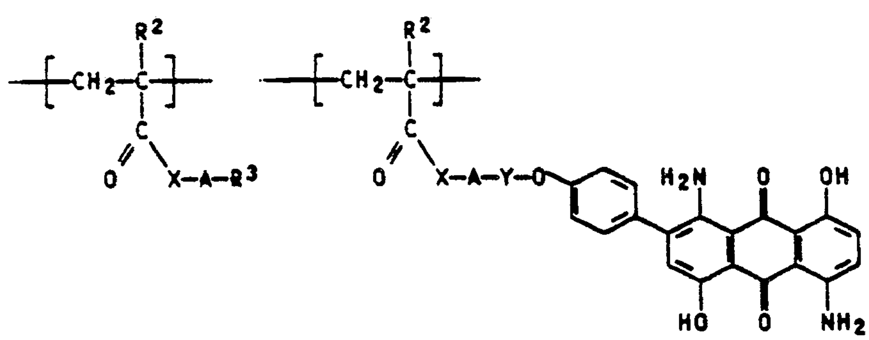

dans laquelle

X représente -O- ou -NR$^1$

$R^2$ hydrogène, méthyle ou chlore et
$R^3$ un groupe mésogène, et le copolymère pouvant porter des groupes mésogène identiques ou différents.

3. Copolymère cristallin liquide selon la revendication 1 ou 2, caractérisé par le fait que Y est une liaison chimique.

4. Copolymère cristallin liquide selon la revendication 2 ou 3, caractérisé par le fait que $R^3$ est mis pour des groupes des formules

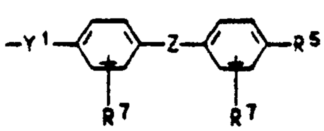
,
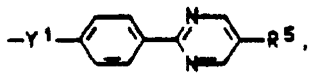
,
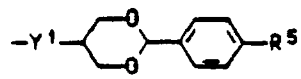
,

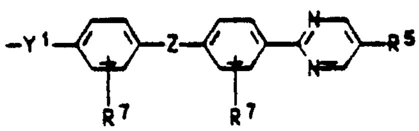
,
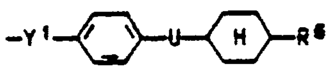
ou

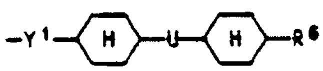

dans lesquels

$Y^1$ représente

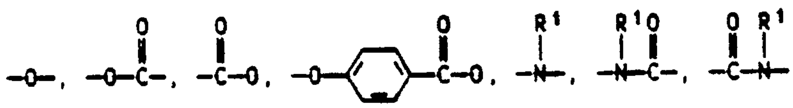
ou $-S-$,

Z, une liaison chimique ou un reste de la formule

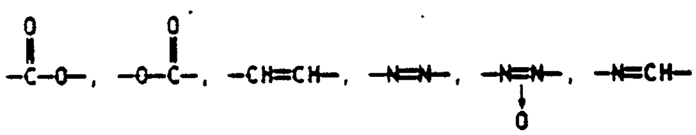
ou $-CH=N-$,

U, une liaison chimique ou un reste de la formule

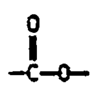
ou
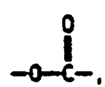
,

$R^5$ hydrogène, alkyle en $C_1$-$C_{12}$, cycloalkyle en $C_5$-$C_7$, alcoxy en $C_1$-$C_{12}$, alcoxycarbonyle en $C_4$-$C_{12}$, alcanoyloxy en $C_1$-$C_{12}$, fluor, chlore, brome, cyano, phényle, 4-cyanophényle ou nitro.
$R^6$, hydrogène, alkyle en $C_1$-$C_{12}$, alcoxy en $C_1$-$C_{12}$ ou alcoxycarbonyle en $C_1$-$C_{12}$ et
$R^7$ méthyle, éthyle, méthoxy, éthoxy, ou chlore.

5. Copolymère cristallin liquide selon la revendication 2 ou 3, caractérisé par le fait que
$R^2$ représente hydrogène ou méthyle,
X, -O-

A, un groupe alkylène en $C_2$-$C_{20}$ linéaire et

$R^3$ 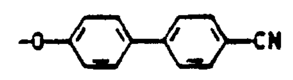 , 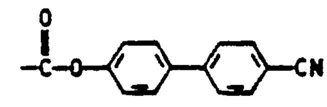 , 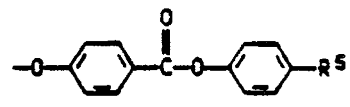 ,

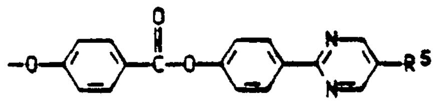 , 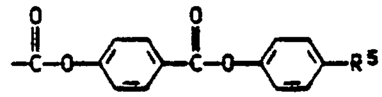 , 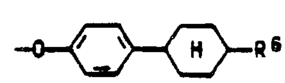 ,

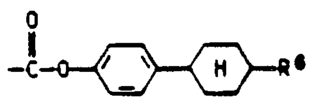 , 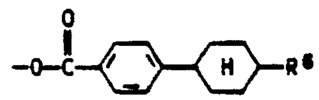 , 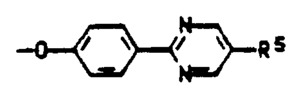 ,

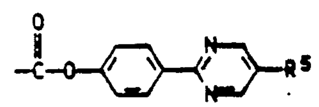 , 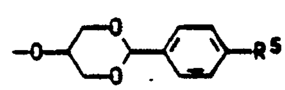 ou 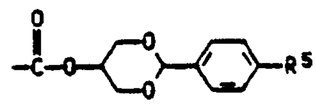

où

$R^5$ est mis pour alkyle en $C_1$-$C_{12}$, alcoxy en $C_1$-$C_{12}$, alcoxycarbonyle en $C_4$-$C_{12}$, alcanoyloxy en $C_1$-$C_{12}$, fluor, chlore, cyano, phényle, 4-cyanophényle ou nitro et
$R^6$ pour alkyle en $C_1$-$C_{12}$.

6. Copolymère cristallin liquide selon la revendication 1, caractérisé par le fait que le polymère est décrit par la formule générale

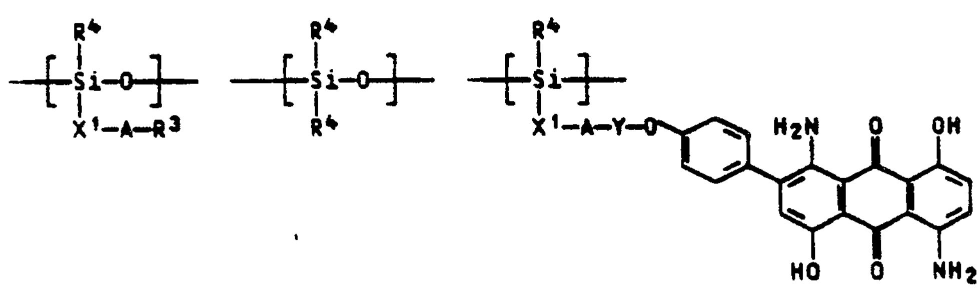

dans laquelle
$R^3$ représente un groupe mésogène
$X^1$, une liaison chimique et
$R^4$, alkyle en $C_1$-$C_4$ ou phényle.

7. Copolymère cristallin liquide selon les revendications 1 à 5, caractérisé par le fait que celui-ci contient 0,5 à 40 % en poids, rapportés au polymère, de colorant.